# EUROPÄISCHE PATENTANMELDUNG

(11) **EP 1 632 325 A1**
(43) Veröffentlichungstag der Anmeldung: **08.03.2006**
(21) Anmeldenummer: 05019421.6
(22) Anmeldetag: 07.09.2005
(51) Int. Cl.: B27B 33/14, B27B 17/02, B23D 57/02

(54) **Sägekette für eine Kettensäge**

(30) Priorität: 07.09.2004 AT 14972004
(71) Anmelder: Etablissement Euroligna Maschinen Aggregate Industriebedarf, 9490 Vaduz (LI)
(72) Erfinder: Freithofnigg, Ingo, Dipl. Vw. Ing., 3382 Loosdorf (AT)
(74) Vertreter: Puchberger, Peter

(57) **Zusammenfassung**

Säge und Sägekette zum Sägen und Stemmen, wobei eine Sägekette (2) auf einer Führungsschiene (10) um die Führungsschienenspitze (3) geführt ist, wobei in Vorschubrichtung (5) der Sägekette (2) eine Schneidzahnanordnung (6,7) und eine Räumzahnanordnung (8) jeweils abwechselnd angeordnet sind.

## Beschreibung

Die Erfindung betrifft eine Säge und Sägekette zum Sägen und Stemmen, wobei eine Sägekette auf einer Führungsschiene um die Führungsschienenspitze geführt ist.

Das Anwendungsgebiet der erfindungsgemäßen Säge und Sägekette sind Kettensägen, wobei eine Sägekette auf einer Führungsschiene geführt ist und wobei die Sägekette an einem Ende der Führungsschiene von einem Motor bewegt und die Sägekette am anderen Ende über die Führungsschienenspitze geführt und umgelenkt wird. Derartige Kettensägen sind seit langer Zeit bekannt und dienen üblicherweise zum Sägen von Holz und holzähnlichen Produkten, aber auch von härteren Materialien wie Stein, Ziegel und anderes Mauerwerk.

Vom Stand der Technik her, unterscheidet man Sägen mit Schneidketten und solche mit Stemmketten. Schneidketten dienen zum Sägen herkömmlicher Art, wobei also das Blatt oder die Führungsschiene mit der Sägekette durch das Sägegut geführt wird. Die aufeinanderfolgenden Zähne der Schneidkette, auch Schneidzähne genannt, sind abwechselnd links und rechts geschränkt.

Für manche Anwendungen von Kettensägen ist es notwendig, die Führungsschienenspitze so auszubilden, dass ein Einstechen in das Sägegut möglich ist. Dies wiederum erfordert eine spezielle Zahngeometrie, die sich von der Geometrie eines Sägezahnes einer Schneidkette unterscheidet. Diese sogenannten Räumzähne eignen sich jedoch nicht oder nur sehr bedingt zum normalen Sägen. Wenn z.B. in ein Brett ein Langloch zu sägen ist muss die Stemmkette mehrmals entlang einer Linie eingestochen werden, was aufwendig ist und kein schönes Schnittbild ergibt.

Aufgabe der vorliegenden Erfindung ist es somit, die Säge und Sägekette so auszugestalten, dass sie sowohl zum Sägen als auch zum Stemmen verwendet werden kann.

Die erfindungsgemäße Säge und Sägekette ist dadurch gekennzeichnet, dass in Laufrichtung der Sägekette eine Schneidzahnanordnung und eine Räumzahnanordnung jeweils abwechselnd angeordnet sind. Auch bei der erfindungsgemäßen Sägekette sind bevorzugt die jeweils aufeinanderfolgenden Schneidzähne abwechselnd links und rechts geschränkt. In einer vorteilhaften Weiterbildung der Erfindung sind das Zahndach und die Schlüsselbrust der Schneidzähne unter Bildung von jeweils außenliegenden Schneidkanten abgeschrägt.

Diese Anordnung der Schneid- bzw. Räumzähne kann unterschiedlich ausgeführt sein. Beispielsweise können die Schneid- und Räumzähne abwechselnd angeordnet sein aber auch in Gruppen aufeinander folgen. Auch die Anordnung mehrer gleicher oder verschiedenartiger Zähne auf einem Kettenglied sind mögliche Ausführungsformen der vorliegenden Erfindung.

Weitere Kennzeichen der vorliegenden Erfindung sind, dass in Laufrichtung der Sägekette eine Schneidzahnanordnung und eine Räumzahnanordnung jeweils abwechselnd angeordnet sind, dass die Schneidzähne aufeinanderfolgend linke und rechte Schneidzähne sind und dass die linken oder rechten Schneidzähne nach außen schneidenbildende angeschrägte Zahnbrüste und Zahndächer unter Bildung jeweils außen liegender Schneidkanten und Schneidspitzen aufweisen. Die Schneidzähne können jeweils ein um einen Freihaltewinkel abfallendes Zahndach aufweisen, und die Sägekette über die Führungsschienenspitze geführt ist, die zum Einstechen in das Sägegut geeignet ist, wobei der Freihaltewinkel dem Umlenkradius derart angepasst ist, dass das Zahndach über seine ganze Länge innerhalb des Schneidradius liegt.

Weiters kann die vorliegende Erfindung dadurch gekennzeichnet sein, dass das Zahndach über seine ganze Länge den gleichen Freihaltewinkel hat, oder das Zahndach mehrere gerade Abschnitte mit jeweils steigendem Freihaltewinkel aufweist.

Das Zahndach kann auch einen kurvenförmigen Verlauf mit zunehmendem Radius haben. Jeweils mehrere Sägeketten können nebeneinander in miteinander verbundenen Führungsschienen jeweils einzeln geführt sein.

Weitere vorteilhafte Merkmale der Erfindung sind den Ansprüchen und der nachfolgenden Beschreibung, sowie den Zeichnungen zu entnehmen.

Im nachfolgenden wird die Erfindung beispielsweise anhand der Zeichnungen näher beschrieben.
Fig.1 zeigt die Seitenansicht einer schematisch dargestellten Kettensäge die in ein im Schnitt dargestelltes Schnittgut eingestochen ist.
Fig.2 zeigt eine exemplarische Abfolge von Schneid- und Räumzähnen in Seitenansicht.
In Fig. 3 ist ein Schnitt durch eine mehrreihige Anordnung miteinander verbundener Führungsschienen in Schnittdarstellung zu sehen.
In Fig.4 sind die ins Schnittgut eingestochene Spitze der Säge sowie ein Detail der selben zu sehen.
Fig.5 bis Fig.7 zeigen eine genauere Darstellung von Variationen der Schneidzahngeometrie.

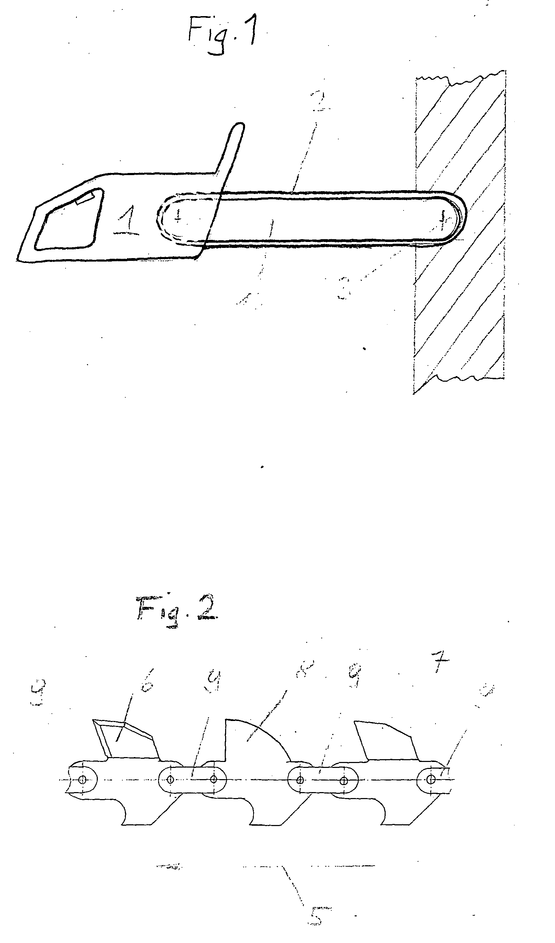

Die Fig. 1 zeigt schematisch die Seitenansicht einer Kettensäge 1 mit Sägekette 2 und Führungsschiene 10, wobei die Führungsschienenspitze 3 gerade in das Sägegut 4 eindringt. Dieser Vorgang, auch Stemmen genannt, ist mit einer herkömmlichen Sägekette nur bedingt möglich.

Fig. 2 zeigt eine bevorzugte Anordnung der Sägezähne mit Vorschubrichtung 5. Der rechtsgeschränkte Schneidzahn 6 ist in Vorschubrichtung 5 betrachtet nach rechts gebogen, der linksgeschränkte Schneidzahn 7 nach links. Der Räumzahn 8 ist zentrisch angeordnet also nicht geschränkt. Verbunden sind die einzelnen Sägezahnglieder über die Verbindungsglieder 9.

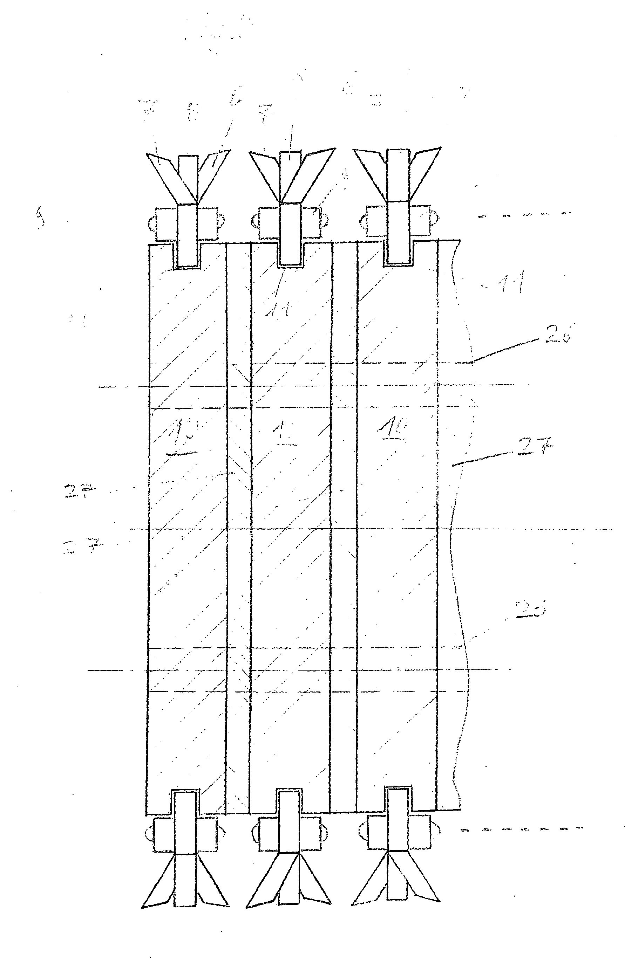

Fig.3 zeigt eine mehrreihige Anordnung von mittels Verbindungselementen 26 wie Schrauben oder Schraubbolzen miteinander verbundenen Führungsschienen 10, auf der separat laufende Sägeketten gemäß Erfindung in den jeweiligen Führungsnuten 11 laufen. Zwischen den Führungsschienen befinden sich Zwischenstücke 27, die in vorrangig als Distanzplatten aber auch als Schwingungsdämpferplatten oder als zusätzliche Werkzeughalter dienen.
Solch eine Anordnung wird benötigt, um die Breite der zu stemmenden Ausnehmung zu vergrößern ohne dabei eine andere Sägekette verwenden zu müssen. Bei herkömmlichen Stemmsägen breiterer Ausführungen wird eine einzige, breitere Kette verwendet. Bei diesen Ketten ist das Nachschleifen von einzelnen Sägezähnen nicht mehr möglich, da sie im Verbund für das Schleifgerät unzugänglich sind. Bei der vorliegenden Erfindung hingegen können die Ketten einzeln bearbeitet oder auch getauscht werden. Auch die Breite kann dank des modularen Systems variiert werden.
Sehr gut sind in dieser Figur die rechtsgeschränkten Schneidzähne 6, die linksgeschränkten Schneidzähne 7, die senkrecht stehenden Räumzähne 8 sowie die Verbindungsglieder 9 zu sehen.

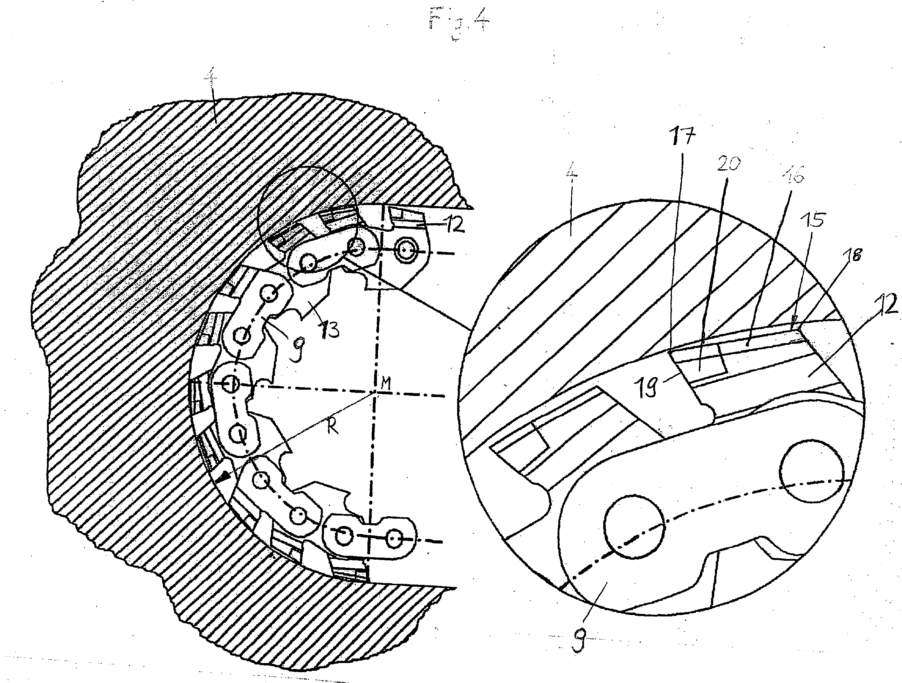

Die Fig. 4 zeigt eine herkömmliche Sägekette in eingestochenem Zustand im Sägegut 4. Die Sägekette umfasst eine Aufeinanderfolge von Zähnen 12, die mit dem Zahnfuß 13 die Kettenglieder bilden. Die einzelnen Zahnkettenglieder sind hier mit Verbindungsgliedern 9 verbunden.
Die Zahnfüße 13 der Kette laufen in üblicher Weise in der hier nicht dargestellten Führungsschiene und im Umlenkbereich der Führungsschienenspitze laufen die Zahnfüße entweder über eine entsprechend umgelenkte Führungsnut der Führungsschiene oder in bevorzugter Weise über ein Umlenkrad.
Der vergrößerte Ausschnitt der Fig. 4 zeigt die Seitenansicht der Schneide des Zahns 12. Das Zahndach 15 ist seiner Länge entlang abgeschrägt und bildet die Dachschneide 16. Das Zahndach verläuft von der Schneidspitze 17 mit einem flachen Freihaltewinkel von etwa 3° bis 5° bis zur Rückkante 18. Der Zahn 12 ist vorne durch die Zahnbrust 19 abgeschlossen. Im Bereich der Schneidspitze 17 sitzt hier beispielsweise ein Hartmetallelement 20, um die Standfestigkeit der Sägekette zu erhöhen.

Bei Ansicht der Fig. 4 ist leicht erkennbar, dass bei kleinen Umlenkradien R die Rückkante 18 mit dem Sägegut 9 in Berührung kommt, wodurch es zu dem nachteiligen Verklemmen der Säge kommen kann. Um dieses Problem zu lösen, weisen die Schneidzähne bevorzugt eine besondere Schneidgeometrie auf.

Die Figuren 5, 6 und 7 zeigen drei Varianten der Ausbildung der Dachschneidegeometrie, mit denen das aufgezeigte Problem behebbar ist.

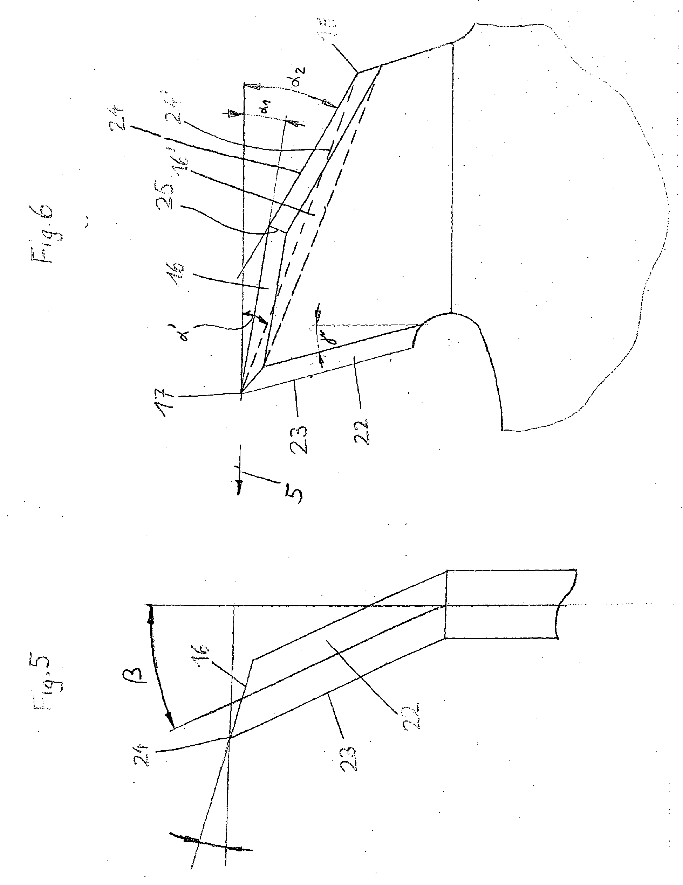

In Fig. 6 sind zwei Ausführungsvarianten gemeinsam dargestellt. Die eine strichliert eingezeichnete Ausführung umfasst eine Dachschneide 16', deren Freihaltewinkel α' gegenüber der Vorschubrichtung 5 größer ist, als es dem üblichen Freihaltewinkel von 3° bis 5° entspricht. Es versteht sich von selbst, dass der Freihaltewinkel α' desto größer sein muss, je kleiner der Umlenkradius R ist. An dieser Stelle sei darauf hingewiesen, dass die Anordnung eines Freihaltewinkels größer 5° in der Praxis nicht naheliegend war, da derart gebildete steile Zähne ein raues Schneidverhalten mit sich brachten. Bei den vorliegenden erfindungsgemäßen Ausführungen wird das Schneidverhalten dadurch verbessert, dass sowohl das Zahndach durch die Dachschneide als auch die Zahnbrust unter Ausbildung der Brustschneide 22 derart abgeschrägt sind, dass außenliegende Schneidkanten 23, 24 gebildet sind.

Die im Bereich der Dachschneide abgewandelte Ausführungsform, die mit vollen Linien durchgezogen ist, weist einen in einem ersten Freihaltewinkel α₁ geführten Abschnitt der Dachschneide 16 auf. Nach einem Knick 25 ist die Dachschneide in einem steileren Winkel α₂ bis zur Rückkante 18 des Zahns geführt.

Auch mit dieser Ausführungsvariante ist sichergestellt, dass der Freihaltewinkel insgesamt immer groß genug ist, sodass die Rückkante 18 oder irgend ein anderer Abschnitt der Dachschneide - außer der Schneidspitze 17 - immer genügend Abstand zum Sägegut hat.

In Fig. 6 ist auch noch der Anstellwinkel y der Brustschneide 22 eingezeichnet. Dieser Winkel kann in bekannter Weise auch 0 betragen, oder die Brustschneide 22 kann auch konkav ausgebildet sein.

Die Fig. 5 zeigt die Ansicht des Zahnes gemäß Fig. 6 in Richtung entgegen gesetzt zur Vorschubrichtung oder Schneidrichtung 5 der Sägekette. Zu sehen ist der Schränkwinkel β und man spricht von einer rechten Schränkung. Wie üblich folgen entlang der Sägekette abwechselnd linke und rechte Schränkungen aufeinander, damit die Sägenut im Sägegut breit genug ist, um ein Verklemmen der Säge und insbesondere der Führungsschiene zu vermeiden.

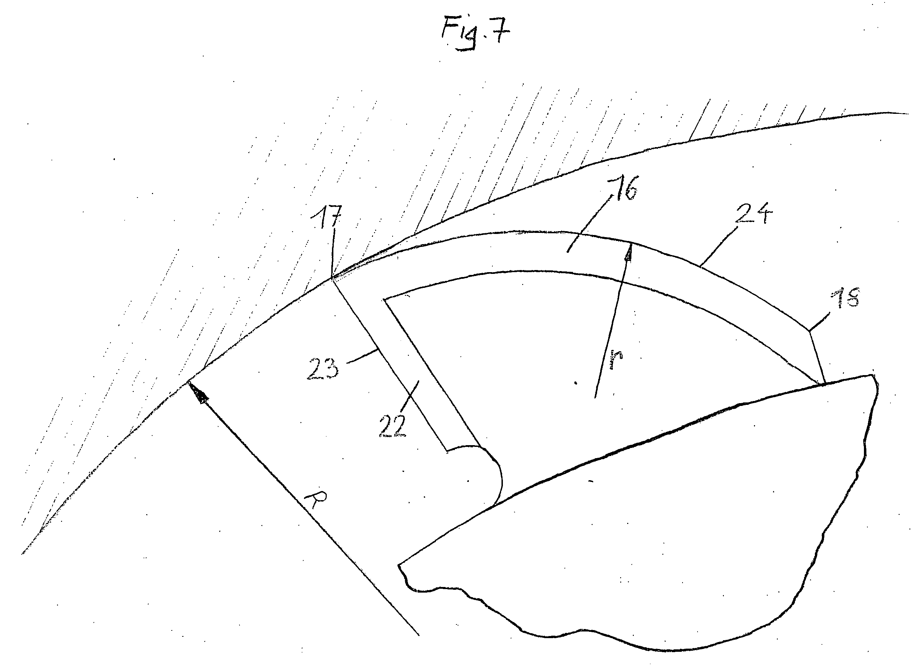

Fig. 7 zeigt eine andere Ausführungsform mit den gleichen erfindungsgemäßen Eigenschaften. Die Dachschneide 16 ist hierbei nicht mit geraden Abschnitten ausgeführt, sondern mit einer durchgehenden Kurvenform von der Schneidspitze 17 bis zur Rückkante 18. Der Rundungswinkelradius r wird bevorzugt von der Schneidspitze 17 bis zur Rückkante 18 hin immer größer. Es kann auch genügen, wenn die Rundung nur etwas über das erste Drittel oder die erste Hälfte des Weges verläuft und dann der Rest der Strecke bis zur Rückkante 8 gerade ausgebildet ist.

## Patentansprüche

1. Säge und Sägekette zum Sägen und Stemmen, wobei eine Sägekette (2) auf einer Führungsschiene (10) um die Führungsschienenspitze(3) geführt ist, **dadurch gekennzeichnet, dass** in Vorschubrichtung(5) der Sägekette(2) eine Schneidzahnanordnung(6,7) und eine Räumzahnanordnung(8) jeweils abwechselnd angeordnet sind.

2. Säge und Sägekette nach Anspruch 1, **dadurch gekennzeichnet, dass** die Schneidzähne aufeinanderfolgend linke und rechte Schneidzähne(7,6) sind.

3. Säge und Sägekette nach Anspruch 1 oder 2, **dadurch gekennzeichnet, dass** die linken oder rechten Schneidzähne(7,6) nach außen schneidenbildende angeschrägte Zahnbrüste(19) und Zahndächer(15) unter Bildung jeweils außen liegender Schneidkanten(23,24) und Schneidspitzen(17) aufweisen.

4. Säge und Sägekette nach einem der vorhergehenden Ansprüche, **dadurch gekennzeichnet, dass** die Schneidzähne jeweils ein um einen Freihaltewinkel abfallendes Zahndach(15) aufweisen, und die Sägekette(2) über die Führungsschienenspitze(3) geführt ist, die zum Einstechen in das Sägegut(4) geeignet ist, wobei der Freihaltewinkel dem Umlenkradius derart angepasst ist, dass das Zahndach(15) über seine ganze Länge innerhalb des Schneidradius liegt.

5. Säge und Sägekette nach einem der vorhergehenden Ansprüche, **dadurch gekennzeichnet, dass** das Zahndach(15) über seine ganze Länge den gleichen Freihaltewinkel(α₁) hat.

6. Säge und Sägekette nach einem der vorhergehenden Ansprüche, **dadurch gekennzeichnet, dass** das Zahndach(15) mehrere gerade Abschnitte mit jeweils steigendem Freihaltewinkel(α₁,α₂) aufweist.

7. Säge und Sägekette nach einem der vorhergehenden Ansprüche, **dadurch gekennzeichnet, dass** das Zahndach(15) einen kurvenförmigen Verlauf mit zunehmendem Radius hat.

8. Säge und Sägekette nach einem der vorhergehenden Ansprüche, **dadurch gekennzeichnet, dass** mehrere Sägeketten(2) nebeneinander in miteinander verbundenen Führungsschienen(1 0) jeweils einzeln geführt sind.

9. Säge und Sägekette nach Anspruch 8, **dadurch gekennzeichnet, dass** zwischen den Führungsschienen Zwischenstücke(27) vorgesehen sind.

10. Säge und Sägekette nach Anspruch 8 oder 9, **dadurch gekennzeichnet, dass** die Verbindungselemente Schrauben, bevorzugt Schraubenbolzen sind.
